# FASCICULE DE BREVET EUROPEEN

(11) **EP 3 057 830 B1**
(45) Date de publication et mention de la délivrance du brevet: **08.05.2019**
(21) Numéro de dépôt: 14802094.4
(22) Date de dépôt: 17.10.2014
(51) Int. Cl.: B60P 3/08, B60P 1/48

(54) **PROCÉDÉ DE CHARGEMENT ET DE DÉCHARGEMENT D'UN ESPACE LOCALISE SUR UN VÉHICULE**
VERFAHREN ZUM BE- UND ENTLADEN EINES RAUMS AUF EINEM FAHRZEUG
METHOD FOR LOADING AND UNLOADING A SPACE LOCATED ON A VEHICLE

(30) Priorité: 17.10.2013 FR 1360129
(43) Date de publication de la demande: 24.08.2016
(73) Titulaire: Lohr Electromecanique, 67980 Hangenbieten (FR)
(72) Inventeur: SCHEER, Daniel, F-67190 Still (FR); VERDIER, Laurent, F-67114 Eschau (FR)
(74) Mandataire: Merckling, Norbert
(86) Numéro de dépôt international: PCT/FR2014/052654
(87) Numéro de publication internationale: WO 2015/055967

(56) Documents cités:
- US-A- 4 597 712
- US-A- 4 690 609
- US-A- 5 525 026
- US-A1- 2004 019 471

## Description

### Domaine technique

La présente invention se rapporte au domaine technique général du transport de fret et notamment du transport de charges disposées sur des palettes. Ces charges sont par exemple des voitures présentant des gabarits identiques ou différents.

L'invention concerne plus particulièrement un procédé de chargement/déchargement d'un espace de chargement et un dispositif de chargement/déchargement permettant de mettre en oeuvre ledit procédé. Un tel dispositif peut ainsi équiper un véhicule routier du genre fourgon, remorque, semi-remorque, convoi articulé, un conteneur destiné à être chargé sur une semi-remorque ou un porte-conteneur ou un wagon.

### Etat de la technique

On connaît par exemple par l'intermédiaire du document US 4,597,712 un appareil pour charger et décharger des semi-remorques. Cet appareil est monté à l'extrémité arrière d'un espace de chargement et comprend des bras articulés pour saisir latéralement un véhicule s'appuyant sur des supports de roues et déplacer l'ensemble vers une position de chargement. Les diverses opérations et mouvements sont pilotés par un opérateur agissant une console de commande. Un tel appareil présente l'inconvénient d'être commandé en continu par un opérateur. En outre, l'opérateur ne dispose pas toujours de l'ensemble des informations nécessaires à un chargement optimal, à un déchargement, à un transport optimal ou à une distribution imposant des contraintes particulières. Il peut arriver ainsi que les charges, en l'occurrence des véhicules, sont disposées, dans des positions de chargement non optimales voire dangereuses. Une erreur de chargement ne peut alors être corrigée qu'en déplaçant à nouveau au moins certaines charges. Il en résulterait notamment une perte de temps substantielle. La préhension des voitures, laquelle doit assurer de par le positionnement des bras de préhension le non basculement de la voiture est par ailleurs effectuée au jugé par un opérateur. La préhension peut donc s'avérer être une opération longue, mais également une opération relativement dangereuse.

On connaît également un système de chargement décrit dans le document US 5,525,026 au nom de Walter P. DeMonte, lequel présente un certain nombre d'inconvénients. En effet, le système décrit présente une automatisation non optimisée. En outre, l'intervention d'un opérateur est nécessaire en cas de non verrouillage de la palette. Aucune action corrective automatisée n'est possible.

### Divulgation de l'invention

L'objet de la présente invention vise par conséquent à pallier les inconvénients de l'art antérieur en proposant un nouveau procédé de chargement/déchargement dont la mise en oeuvre est simple, rapide et fiable.

Un autre objet de la présente invention vise à proposer un nouveau procédé de chargement/déchargement permettant d'assister au mieux un opérateur, notamment en tenant compte d'une quantité importante de données relatives à des contraintes de chargement, de déchargement ou de transport.

Un autre objet de la présente invention vise à fournir un nouveau dispositif de chargement/déchargement pour mettre en oeuvre le nouveau procédé de chargement/déchargement.

Les objets assignés à l'invention sont atteints à l'aide d'un procédé de chargement/déchargement d'un espace de chargement délimité par des éléments de structure d'au moins un véhicule routier ou ferroviaire ou un conteneur, avec des charges comprenant notamment des voitures et/ou du fret, consistant à utiliser un manipulateur motorisé comportant deux bras articulés, notamment dans leur partie supérieure, pour déplacer les charges de l'extérieur de l'espace de chargement vers une position de chargement sur les éléments de structure dans l'espace de chargement et inversement, caractérisé en ce qu'il consiste à :
a - saisir ou importer des données primaires relatives aux charges dans un automate,
b - calculer automatiquement grâce à une intelligence embarquée ou à distance, la position optimale de chargement pour chaque charge en fonction des données primaires et de données complémentaires relatives à des contraintes de chargement et/ou de déchargement, de transport et/ou de distribution des charges,
c - déterminer automatiquement grâce à une intelligence embarquée ou à distance les déplacements automatisés du manipulateur motorisé par l'intermédiaire de l'automate en fonction des calculs effectués lors de l'étape b),
d - saisir automatiquement à l'aide du manipulateur motorisé une palette dans une position de stockage dans l'espace de chargement et positionner ladite palette dans une position de chargement située à l'arrière du véhicule,
e - disposer une charge sur la palette, et
f - déplacer automatiquement à l'aide du manipulateur motorisé, la palette supportant la charge dans sa position de chargement optimale et verrouiller ladite palette chargée sur les éléments de structure du véhicule de manière automatique et pilotée par l'automate.

Les objets assignés à l'invention sont également atteints à l'aide d'un procédé de déchargement d'un véhicule chargé selon le procédé de chargement conforme à la revendication 1, après une phase de transport des charges, caractérisé en ce qu'il consiste à :
g - utiliser l'ensemble des données relatives au chargement enregistrées pour déterminer une séquence de déchargement des palettes chargées disposées dans l'espace de chargement,
h - déverrouiller automatiquement une palette chargée à décharger et déplacer ladite palette chargée à l'aide du manipulateur motorisé vers une position de déchargement extérieure à l'arrière du véhicule,
i - dégager la charge de la palette, et
j - ramener et déposer automatiquement à l'aide du manipulateur motorisé, la palette vide dans une position de stockage dans l'espace de chargement.

Par « position de chargement optimale », on entend une position qui soit compatible avec un volume de chargement maximal tout en exploitant de façon appropriée la quantité et la répartition des charges dans l'espace de chargement.

Selon un exemple de mise en oeuvre conforme à l'invention, le procédé consiste à réitérer les opérations chargement d) à f) et les opérations de déchargement g) à i) de manière à charger, respectivement décharger complètement le véhicule.

Selon un exemple de mise en oeuvre conforme à l'invention, le procédé consiste à déplacer le manipulateur motorisé de manière guidée sur les éléments de structure pour pouvoir atteindre chacune des positions de chargement déterminées.

Selon un exemple de mise en oeuvre conforme à l'invention, le procédé consiste à charger/décharger un train de véhicules, du genre véhicule à moteur et remorque, comprenant un premier véhicule comportant un premier espace de chargement et un second véhicule articulé au premier et comportant un second espace de chargement.

Selon un exemple de mise en oeuvre conforme à l'invention, le procédé consiste à l'issue des opérations de chargement/déchargement, à escamoter le manipulateur motorisé dans une position de transport définie sur les éléments de structure. Le manipulateur motorisé est alors positionné par exemple dans une zone arrière et haute de l'espace de chargement.

Selon un exemple de mise en oeuvre conforme à l'invention, le procédé consiste à déplacer lors du chargement certaines palettes d'une zone de stockage vers une autre, de manière à mieux répartir les charges dans le véhicule.

Selon un exemple de mise en oeuvre conforme à l'invention, le procédé consiste à utiliser un automate embarqué.

Selon un exemple de mise en oeuvre conforme à l'invention, le procédé consiste à échanger des informations avec un opérateur et/ou avec des bases de stockage de données, via une liaison de communication sans fil reliant l'automate à un appareil du genre PC, tablette tactile ou téléphone mobile de l'opérateur.

Selon un exemple de mise en oeuvre conforme à l'invention, le procédé consiste à transmettre à l'opérateur des instructions de chargement et notamment les sens de roulage sur les palettes lorsque les charges sont des voitures ou sur l'identification de la charge à déposer sur la palette saisie par le manipulateur motorisé.

Selon un exemple de mise en oeuvre conforme à l'invention, le procédé consiste à actualiser régulièrement les données enregistrées dans des bases de stockage de données alimentant l'automate.

Selon un exemple de mise en oeuvre conforme à l'invention, le procédé consiste à utiliser des bases de stockage de données délocalisées par rapport à l'automate.

Selon un exemple de mise en oeuvre conforme à l'invention, le procédé consiste à utiliser un moyen de saisie de données, permettant à l'opérateur de saisir dans l'automate des informations complémentaires, liées par exemple au chargement, au déchargement ou à des contraintes inattendues, lesquelles doivent être prises en compte pour effectuer les opérations de chargement d) à f) ou de déchargement g) à i).

Selon un exemple de mise en oeuvre conforme à l'invention, le procédé consiste à immobiliser la palette supportant la charge à l'extérieure du véhicule et ce à une hauteur donnée, pour sangler et/ou désangler plus facilement la charge sur la palette.

Selon un exemple de mise en oeuvre conforme à l'invention, le procédé consiste à fournir à l'automate une instruction de poursuite de l'opération de chargement ou de déchargement, dès que les opérations respectives pour sangler ou désangler la charge sont terminées.

Selon un exemple de mise en oeuvre conforme à l'invention, le procédé consiste à transmettre à un opérateur des instructions pour sangler les charges entre les étapes e) et f). Il va de soi qu'une opération de désanglage est alors nécessaire lors du déchargement.

Les charges sont par exemple essentiellement constituées de voitures.

Les objets assignés à l'invention sont également atteints à l'aide d'un dispositif de chargement/déchargement pour mettre en oeuvre le procédé de chargement/déchargement présenté ci-dessus, comprenant un manipulateur motorisé comportant deux bras articulés, notamment dans leur partie supérieure, destiné à coopérer avec un véhicule pour déplacer les charges de l'extérieur d'un espace de chargement du véhicule vers une position de chargement sur les éléments de structure dans l'espace de chargement et inversement, caractérisé en ce qu'il comprend :
- une intelligence embarquée ou à distance ;
- un automate pour commander les déplacements automatiques du manipulateur motorisé en fonction des calculs effectués par l'intelligence embarquée ou à distance à partir des données primaires et/ou complémentaires,
- des organes de préhension et d'orientation permettant au manipulateur motorisé de saisir et d'orienter les palettes chargées ou non,
- des moyens de guidage et d'orientation pour déplacer et orienter le manipulateur motorisé le long des éléments de structure du véhicule,
- des moyens de verrouillage/déverrouillage des palettes dans leur position de chargement sur les éléments de structure par des moyens comportant des organes d'actionnement automatisés et pilotés par l'automate, et
- des moyens de communication entre l'automate et l'opérateur supervisant les opérations automatisées de chargement et de déchargement.

Selon un exemple de réalisation du dispositif conforme à l'invention, le manipulateur motorisé comporte deux bras latéraux articulés et destinés à saisir une palette, chaque bras latéral étant d'une part monté pivotant avec sa partie supérieure sur un chariot se déplaçant sur un rail de guidage disposé en partie supérieure des éléments de structure et d'autre part assurant avec sa partie d'extrémité de préhension, un montage pivotant sur un côté de la palette saisie.

Selon un exemple de réalisation du dispositif conforme à l'invention, les éléments de structure et les palettes comportent des organes de fixation respectifs, coopérant entre eux pour verrouiller et déverrouiller les palettes dans leur position de chargement, sur les éléments de structure.

Selon un exemple de réalisation du dispositif conforme à l'invention, chaque rail de guidage comprend une partie mobile ou télescopique permettant au dit rail de guidage de s'allonger pour s'étendre au moins en partie au-dessus du second espace de chargement du second véhicule articulé au premier véhicule, ou pour faire la jonction avec des rails existant au niveau du second espace de chargement, les chariots pouvant alors se déplacer d'un espace de chargement à l'autre.

Selon un exemple de réalisation du dispositif conforme à l'invention, les rails de guidage sont conducteurs électriques, connectés à une source d'énergie électrique et alimentent en énergie électrique les chariots par l'intermédiaire de patins.

Le chariot comporte avantageusement deux parties solidaires se déplaçant chacune sur un rail longitudinal.

Selon un exemple de réalisation du dispositif conforme à l'invention, les bras latéraux sont télescopiques.

Selon un exemple de réalisation du dispositif conforme à l'invention, le manipulateur est associé à un véhicule et embarqué sur ledit véhicule.

Selon un autre exemple de réalisation du dispositif conforme à l'invention, le manipulateur est associé à une base de chargement/déchargement et reste sur ladite base de chargement/déchargement. Le manipulateur n'est donc pas embarqué et demeure par exemple en sortie d'une chaîne de fabrication de voitures dans une installation fixe. Ceci contribue à alléger substantiellement le véhicule ou porte-voiture.

Selon un autre exemple de réalisation du dispositif conforme à l'invention, le manipulateur est un module amovible du véhicule de manière à équiper ou non ledit véhicule. Le véhicule peut donc être dépourvu d'un tel manipulateur lorsqu'il effectue des rotations entre des espaces de chargement équipés chacun d'un tel manipulateur.

Un avantage du procédé de chargement/déchargement conforme à l'invention réside dans le niveau élevé d'automatisation des opérations de chargement et de déchargement.

Un autre avantage du procédé de chargement/déchargement conforme à l'invention réside dans une prise en compte d'un grand nombre de données liées par exemple à des contraintes de transport, de chargement et/ou de l'organisation de la distribution/livraison des charges.

Un autre avantage du procédé de chargement/déchargement conforme à l'invention réside dans une prise en compte en temps réel de paramètres supplémentaires, saisis par l'opérateur et influençant par exemple le chargement et/ou le déchargement. Il peut s'agir par exemple d'une opération de chargement de charges modifiée, obligeant le calculateur à recalculer un nouveau chargement optimal. Il peut aussi s'agir de défectuosités dans les éléments de structure rendant des positions de chargement correspondantes non accessibles.

Un autre avantage du procédé de chargement/déchargement conforme à l'invention réside dans un gain de temps substantiel lors des opérations de chargement et de déchargement. En effet, l'automatisation de ces opérations permet à l'opérateur, par exemple lors du chargement de voitures, à aller chercher une autre voiture à charger, pendant que l'automate procède au placement automatisé d'une voiture dans sa position de chargement. Un gain de temps similaire est observé lors des opérations de déchargement.

Un avantage du dispositif de chargement/déchargement conforme à l'invention réside dans la grande fiabilité qu'il procure et ce malgré un degré élevé d'automatisation.

Un autre avantage du dispositif de chargement/déchargement conforme à l'invention réside dans le fait qu'il s'adapte à des charges de nature différente.

Un autre avantage du dispositif de chargement/déchargement conforme à l'invention réside dans le fait qu'il permet de charger et de décharger très facilement et en toute sécurité des espaces de chargements distincts d'un convoi articulé, constitué par exemple d'une remorque articulée à un véhicule motorisé.

Un autre avantage du dispositif de chargement/déchargement conforme à l'invention réside dans le fait que l'automate n'exécute que des ordres reçus de la part d'une intelligence embarquée ou à distance. Cette intelligence embarquée peut par exemple être un ordinateur connecté à l'automate, tandis que l'intelligence à distance peut par exemple être un ordinateur présent au sein d'un unité centrale, en communication à distance avec l'automate.

Cette intelligence embarquée ou à distance utilise un logiciel spécifique prévu pour effectuer les calculs nécessaires à partir des données primaires et/ou complémentaires afin de déterminer la position et l'orientation optimales de chargement pour chaque charge et de déterminer automatiquement les déplacements qui en résultent pour le chargement de chaque charge.

A partir de ces calculs, l'intelligence embarquée ou à distance transmet alors à l'automate les consignes de mouvement nécessaires pour le déplacement automatisé du manipulateur motorisé.

Un autre avantage du dispositif de chargement/déchargement conforme à l'invention réside dans le fait que la vérification du verrouillage de la palette est faite en utilisant des capteurs d'effort prévus au moins à chaque extrémité de la palette. Lorsque le manipulateur motorisé tire sur la palette, il vérifie que les au moins quatre capteurs d'effort détectent un effort. Si tel n'est pas le cas, cela signifie que les plots de verrouillage ne sont pas correctement engagés. Le manipulateur motorisé effectue alors de légers mouvements jusqu'à la détection d'effort au niveau de tous les capteurs d'effort. Ces capteurs d'effort sont avantageusement très robustes et ne sont pas susceptibles de s'encrasser.

Ainsi, en cas de détection d'un dysfonctionnement dans l'activation du verrouillage, le dispositif de chargement/déchargement conforme à l'invention génère une opération de repositionnement.

Un tel repositionnement entre la palette et la structure porteuse consiste à déplacer légèrement la palette pour utiliser les tolérances de positionnement et activer ainsi de façon certaine les moyens de verrouillage.

Un autre avantage du dispositif de chargement/déchargement conforme à l'invention réside dans le fait que l'intelligence embarquée ou à distance, pour ses calculs, ne tient pas seulement compte des dimensions des charges, mais également de leur forme ou épure, de leur masse et de la position du centre de gravité pour une optimisation du chargement.

Un autre avantage du dispositif de chargement/déchargement conforme à l'invention réside dans le fait qu'il utilise un manipulateur motorisé comportant des bras pouvant être déployés à l'arrière du véhicule de chargement, sans qu'il soit nécessaire de faire sortir, même partiellement le chariot comportant le manipulateur en dehors du gabarit du véhicule de chargement.

Par l'utilisation de bras rigides, le manipulateur motorisé est capable de manipuler des charges de poids élevé en toute sécurité, sans aucun risque de balancement.

Le dispositif de chargement/déchargement conforme à l'invention est également prévu pour tenir compte de la flexion des bras manipulateurs articulés lors de la manipulation de charges de poids élevé, flexion qui entraîne un déplacement vers le bas des palettes, et l'intelligence embarquée ou à distance tient avantageusement compte de cette flexion dans ses calculs.

### Brève description des dessins

D'autres caractéristiques et avantages de la présente invention apparaîtront plus clairement à la lecture de la description qui va suivre, faite en référence au dessin annexé, donné à titre d'exemple non limitatif, dans lequel:
- la figure 1 est un organigramme fonctionnel illustrant un exemple de mise en oeuvre du procédé conforme à l'invention,
- la figure 2 est une vue en perspective d'un exemple de réalisation d'un véhicule pouvant être chargé et déchargé selon un exemple de mise en oeuvre du procédé de chargement/déchargement conforme à l'invention,
- les figures 3 et 4 sont des vues de face d'exemples de réalisation de véhicules pouvant être chargés et déchargés selon un exemple de mise en oeuvre du procédé de chargement/déchargement conforme à l'invention,
- la figure 5 illustre en perspective un exemple de réalisation d'un véhicule avec des palettes de chargement vides, disposées dans des positions de chargement selon le procédé conforme à l'invention,
- la figure 6 illustre en perspective un exemple de réalisation d'un véhicule avec des palettes supportant des charges, disposées dans des positions de chargement selon le procédé conforme à l'invention,
- les figures 7 à 13 représentent un exemple de véhicule dans diverses phases de chargement lors de la mise en oeuvre du procédé de chargement/déchargement conforme à l'invention,
- les figures 14 à 17 illustrent diverses positions du manipulateur motorisé lors d'une opération de préhension et de chargement d'une palette supportant une voiture,
- la figure 18 illustre le manipulateur motorisé déplaçant une palette chargée dans la partie supérieur du véhicule, vers une position de chargement, et
- la figure 19 illustre le manipulateur motorisé, lorsque ce dernier a disposé la palette chargée dans sa position de verrouillage sur la structure du véhicule, laquelle comporte des exemples de treillis permettant un verrouillage longitudinal et vertical de la palette.

### Mode(s) de réalisation de l'invention

Les éléments structurellement et fonctionnellement identiques et présents sur plusieurs figures distinctes, sont affectés d'une même référence numérique ou alphanumérique.

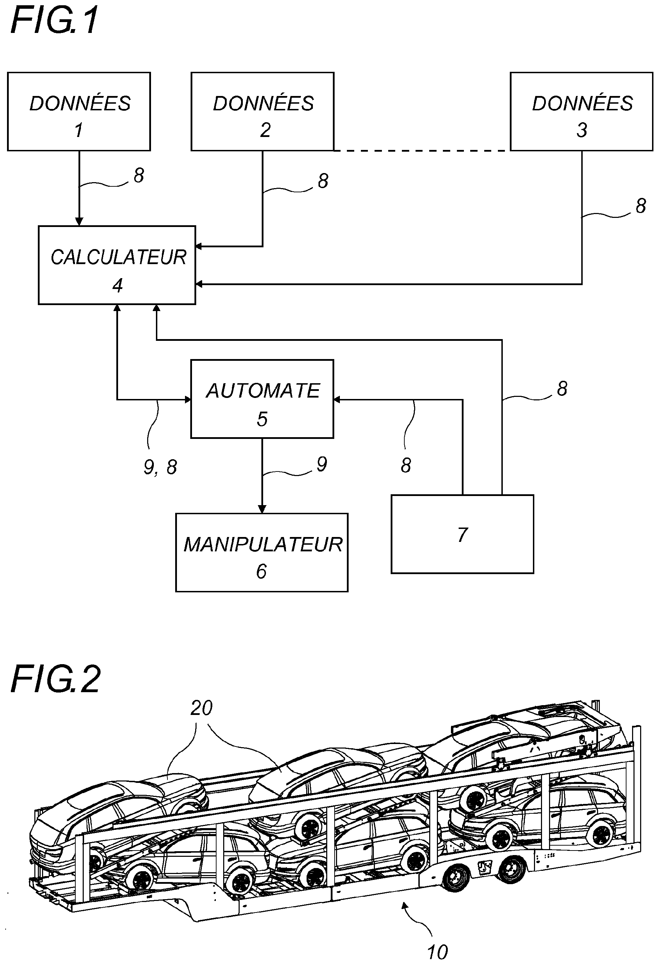

La figure 1 est un organigramme fonctionnel illustrant un exemple de mise en oeuvre du procédé conforme à l'invention. Le procédé de chargement/déchargement conforme à l'invention est mis en oeuvre en utilisant des bases de stockage de données primaires 1, 2 et 3. Ces données sont relatives à des contraintes de livraison des charges, à des contraintes de réglementations du transport (hauteur maximale autorisée, charge maximale par essieu autorisée etc.) et/ou à des contraintes liées à une répartition optimale des charges dans le ou les espaces de chargement.

Le nombre de bases de stockage de données 1, 2, 3 peut bien entendu être variable. Il est possible d'imaginer une base de données 1 délocalisée au siège du transporteur, une base de données 2 délocalisée dans un service de réglementation des transports et une base de données 3 délocalisée chez un client du transporteur.

Le procédé de chargement/déchargement conforme à l'invention est mis en oeuvre en utilisant également un calculateur 4. Ce dernier est alimenté avec des données provenant d'une ou plusieurs bases de stockage de données 1, 2, 3. Un logiciel adéquat est chargé dans le calculateur 4 pour déterminer les positions de chargement des charges en fonctions des données reçues. Le calculateur 4 est soit embarqué, soit délocalisé de préférence au siège du transporteur.

Le logiciel génère ensuite des instructions correspondantes, lesquelles sont transmises à un automate 5 embarqué, lequel commande des actionneurs électriques, hydrauliques ou pneumatiques d'un manipulateur 6 motorisé.

Les déplacements du manipulateur 6, saisissant une palette vide ou supportant une charge, sont alors commandés de façon entièrement automatisée par l'automate 5. Ce dernier comporte avantageusement des moyens électriques ou électroniques pour piloter des actionneurs ainsi que des moyens pour mémoriser les instructions d'actionnement prédéfinies grâce au calculateur 4.

Le procédé de chargement/déchargement conforme à l'invention est mis en oeuvre en utilisant selon une variante de mise en oeuvre conforme à l'invention, un moyen de communication 7 permettant à un opérateur de communiquer avec le calculateur 4 soit directement, soit via l'automate 5.

L'opérateur peut par exemple saisir sur clavier ou sur un écran tactile des données spécifiques nécessaires à la mise en oeuvre du procédé de chargement/déchargement conforme à l'invention. Le calculateur 4 peut alors redéfinir si nécessaires les positions de chargement, la répartition des charges ou les ordres de chargement ou de déchargement en modifiant de façon adéquate les instructions transmises à l'automate 5.

A titre d'exemple, les liaisons de communication entre les bases de stockage de données 1, 2, 3 et le calculateur 4 embarqué, sont des liaisons sans fils 8 du genre GSM. La liaison de communication entre le moyen de communication 7 de l'opérateur et le calculateur 4 ou l'automate 5 est par exemple du genre GSM ou WIFI.

Le moyen de communication 7 est par exemple constitué d'un téléphone mobile, d'un ordinateur portable ou d'une tablette tactile.

Les signaux de commande transmis de l'automate 5 vers des actionneurs du manipulateur 6 passent de préférence dans des liaisons filaires 9 ou par des liaisons sans fils du genre wifi.

La communication entre le calculateur 4 et l'automate 5 est établie soit avec une liaison filaire 9 lorsque ledit calculateur 4 est embarqué, soit avec une liaison sans fil 8, lorsque ledit calculateur 4 est localisé à distance par exemple au siège du transporteur.

D'autres configurations de liaisons de communication peuvent également être envisagées dans le cadre de la présente invention.

La figure 2 est une vue en perspective d'un exemple de réalisation d'un véhicule, en l'occurrence une semi-remorque 10 chargée avec des voitures 20.

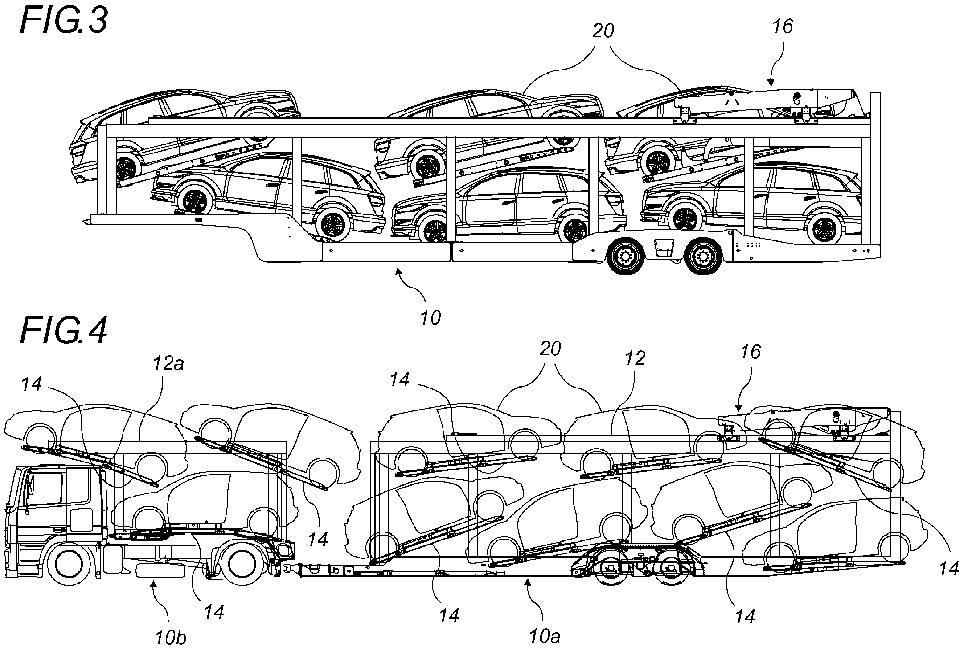

Les figures 3 et 4 sont des vues de face d'exemples de réalisation de véhicules chargés avec des voitures 20. Le véhicule de la figure 3 est une semi-remorque 10 alors que le véhicule de la figure 4 est une remorque 10a attelée à un véhicule motorisé 10b.

La figure 4 illustre un convoi articulé comprenant la remorque 10a chargée avec des voitures 20 disposées sur des palettes 14 selon une répartition donnée et le véhicule motorisé 10b, dont le châssis constitue au moins en partie les éléments de structure 11, délimite un second espace de chargement.

Les deux espaces de chargement, l'une sur la remorque 10a, l'autre sur le châssis, sont alors accessibles aux charges, du genre voitures, grâce à des rails longitudinaux 12 de la remorque 10a, lesquels présentent une partie mobile leur permettant de s'allonger et de s'étendre vers le châssis pour réaliser la jonction avec ses portions de rails longitudinaux 12b du châssis. Les parties mobiles des rails longitudinaux 12 peuvent aussi s'étendre au moins en partie au-dessus du second espace de chargement. Un chariot 16 comportant le manipulateur 6 peut alors se déplacer au-dessus des deux espaces de chargement.

A titre de variante, il est possible de faire avancer le chariot 16 jusqu'à une position extrême avant de la remorque 10a et de l'immobiliser. Les rails longitudinaux 12 sont alors déverrouillés et translatés vers l'avant au-dessus du châssis et ce par tout mécanisme connu. Le chariot 16 peut alors poursuivre son déplacement au-dessus du châssis pour déposer ou saisir une palette 14 chargée. En déplaçant à nouveau les rails longitudinaux 12 en sens inverse, le chariot 16 peut à nouveau se mouvoir jusqu'à l'extrémité arrière de la remorque 10a.

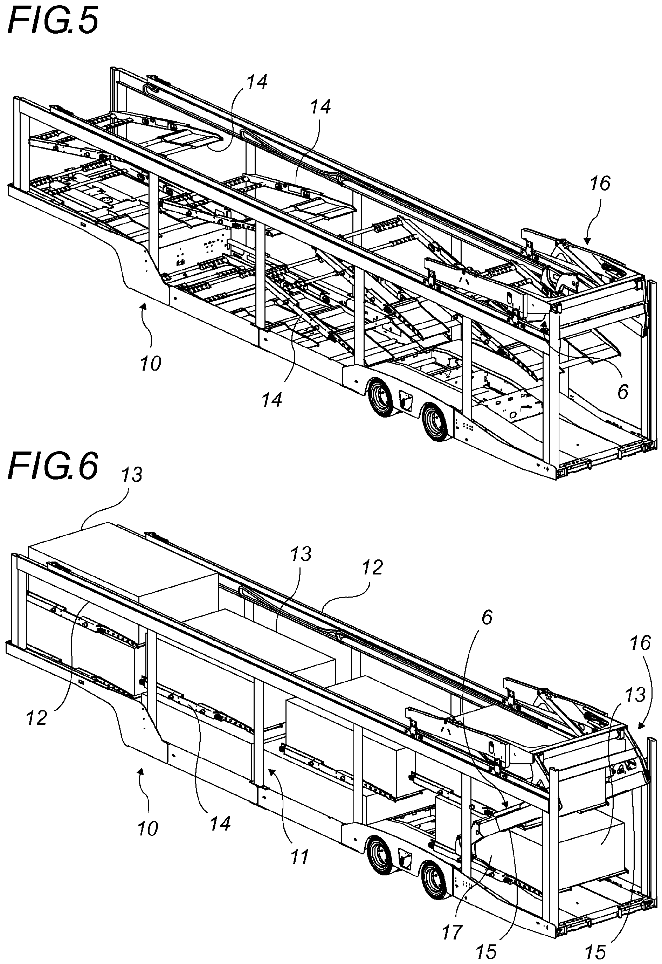

La figure 5 illustre en perspective un exemple de réalisation d'une semi-remorque 10 avec des palettes 14 de chargement vides, disposées dans des positions de chargement selon le procédé conforme à l'invention. Le chariot 16 et le manipulateur 6 se trouvent disposés dans une position de transport située en partie haute et arrière de la semi-remorque 10.

La figure 6 est une vue en perspective d'un exemple de réalisation d'un véhicule pouvant être chargé et déchargé selon un exemple de mise en oeuvre du procédé de chargement/déchargement conforme à l'invention. Le véhicule est constitué d'une semi-remorque 10, laquelle comporte des éléments de structure 11 délimitant un espace de chargement. Les éléments de structure 11 sont par exemple des montants latéraux reliés à leur extrémité supérieur par un rail longitudinal 12.

Des charges 13 sont positionnées sur les éléments de structure 11 par l'intermédiaire de palettes 14.

Le manipulateur 6 comporte deux bras latéraux 15 destinés à saisir une palette 14. Chaque bras latéral 15 est d'une part monté pivotant avec sa partie supérieure sur un chariot 16 se déplaçant sur les rails longitudinaux 12 de guidage et d'autre part assure avec sa partie d'extrémité inférieure la préhension de la palette 14. Cette préhension s'effectue sur chaque côté latéral de la palette 14.

A cet effet, chaque bras latéral 15 présente à son extrémité inférieure, un préhenseur 17 permettant d'établir une liaison articulée avec la palette 14. Le préhenseur 17 comporte avantageusement des griffes escamotables venant s'engager dans des logements correspondants prévus sensiblement vers le centre de chaque bord latéral de la palette 14. La palette 14 peut alors être verrouillée sur les bras latéraux 15.

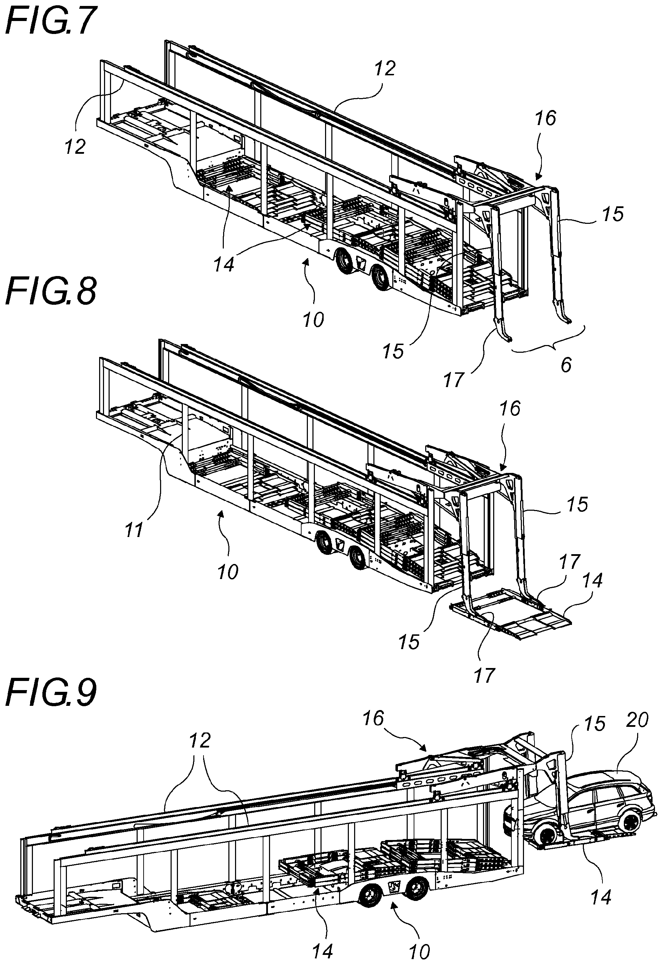

Les figures 7 à 13 représentent une semi-remorque 10 dans diverses configurations de chargement lors de la mise en oeuvre du procédé de chargement/déchargement conforme à l'invention.

La figure 7 montre ainsi un chargement à vide de la semi-remorque 10. Le manipulateur 6 est déplacé à l'arrière de la semi-remorque 10, avec les bras latéraux 15 orientés vers le bas, de manière à pouvoir débuter l'opération de chargement. Les palettes 14 reposent sur le fond de l'espace de chargement dans la semi-remorque 10.

La figure 8 montre le préhenseur 6 saisissant par l'intermédiaire des bras latéraux 15 une première palette 14 dans l'espace de chargement, pour la disposer à l'arrière de la semi-remorque 10, par exemple au sol, à des fins de chargement.

La figure 9 montre la palette 14 supportant un véhicule 20 et soulevée par les bras latéraux 15. La palette 14 ainsi chargée est ensuite déplacée vers l'intérieur de l'espace de chargement de la semi-remorque 10 par l'intermédiaire du chariot 16 roulant sur les rails longitudinaux 12.

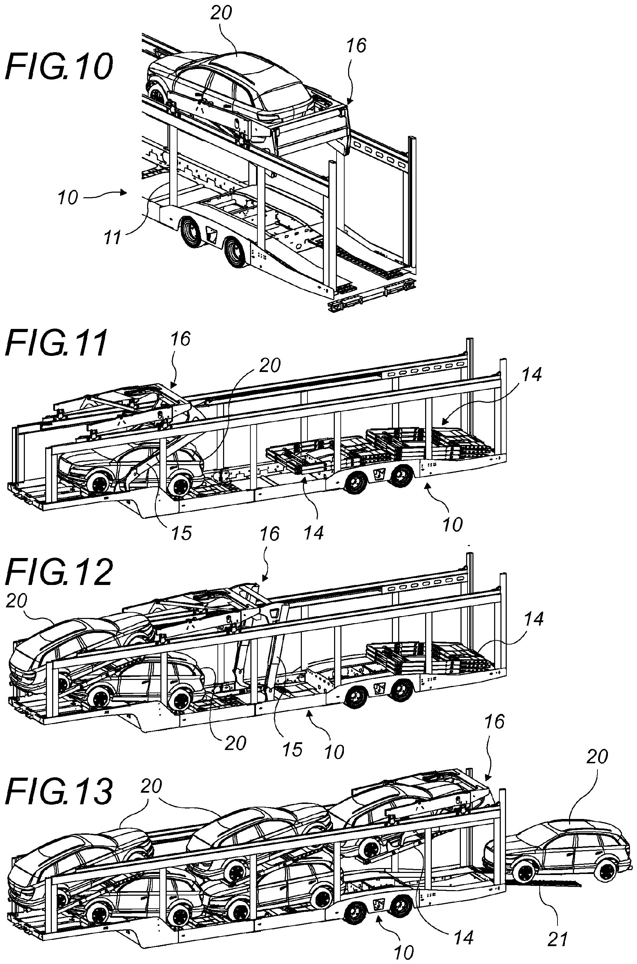

La figure 10 illustre une phase de chargement dans laquelle les bras latéraux 15 soulèvent au maximum la palette 14 supportant la voiture 20. Le chariot 16 peut alors déplacer la voiture 20 vers l'avant de l'espace de chargement, par exemple en passant au-dessus d'une charge ou d'une autre voiture 20 déjà disposée dans l'espace de chargement.

La figure 11 montre le placement de la palette 14 supportant la première voiture 20 à l'avant de la semi-remorque 10 par l'intermédiaire du chariot 16 et des bras latéraux 15. Le manipulateur motorisé 6, peut ensuite saisir une autre palette 14 vide pour poursuivre le chargement de la semi-remorque 10.

La figure 12 montre ainsi le manipulateur motorisé 6 lorsqu'il saisit avec les bras latéraux 15, une palette 14 vide, après avoir positionné et verrouillé la seconde voiture 20 dans l'espace de chargement de la semi-remorque 10.

La figure 13 montre la dernière phase de chargement de la semi-remorque 10. Cette dernière est déjà chargée avec cinq voitures 20 et l'espace de chargement restant permet de charger une sixième voiture 20 en utilisant des rampes 21. Cette dernière voiture 20 doit être conduite dans sa position de chargement par l'opérateur, car le manipulateur motorisé 6 n'est plus en mesure de manipuler et de déplacer la dernière palette 14 chargée, lorsque l'avant-dernière voiture 20 est disposée avec sa palette 14 dans la position arrière et haute de l'espace de chargement.

Selon un autre exemple de réalisation, non représenté, les rampes 21 sont remplacées par un plateau glissant le long de poutres et actionné hydrauliquement ou électriquement.

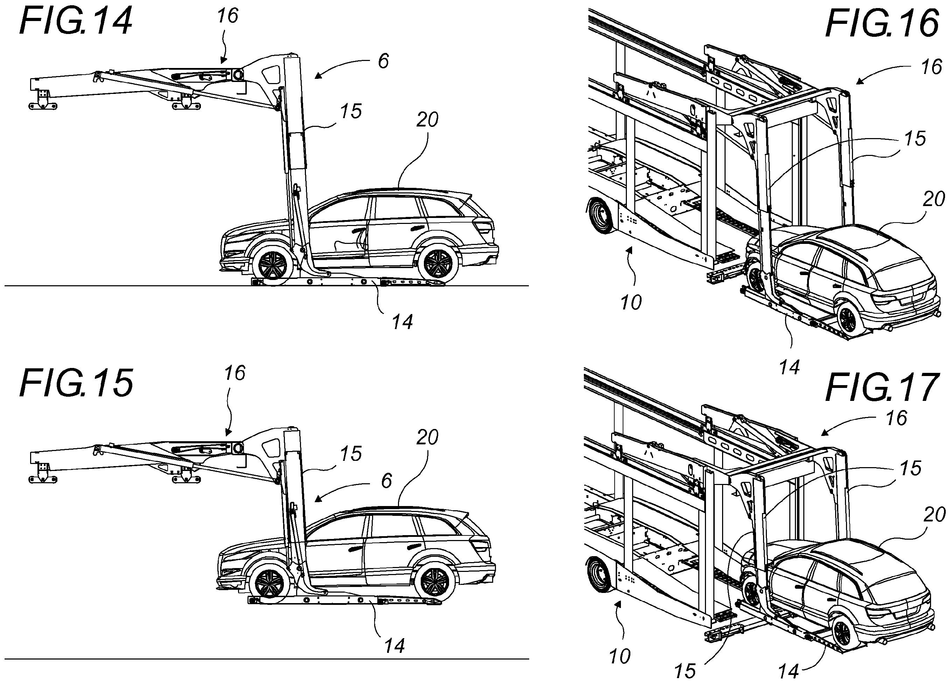

Les figures 14 à 17 illustrent diverses positions du manipulateur motorisé 6 lors d'une opération de préhension et de chargement d'une palette 14 supportant une voiture 20 en position arrière. Les figures 14 et 16 montrent respectivement selon une vue de face et selon une vue en perspective partielles, le manipulateur motorisé 6 plaçant une palette 14 au sol. Cette palette 14 est chargée avec une voiture 20. Les figures 15 et 17 montrent respectivement selon une vue de face et selon une vue en perspective partielle, le manipulateur motorisé 6 plaçant une palette 14 chargée dans une position intermédiaire. Cette dernière permet de soulever la palette 14 chargée par rapport au sol. Cette position intermédiaire stabilisée, permet par exemple à l'opérateur de sangler la voiture 20 sur la palette 14 avant que le manipulateur motorisé 6 ne poursuit la phase de chargement.

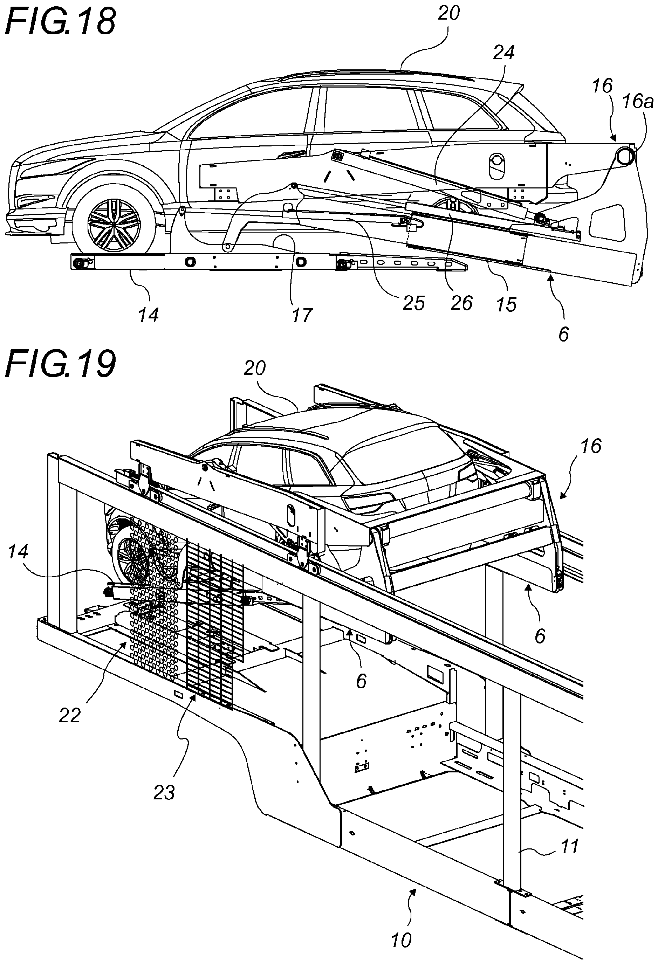

La figure 18 illustre le manipulateur motorisé 6 déplaçant une palette 14 chargée dans la partie supérieur du véhicule vers une position de chargement. La palette 14 est maintenue sensiblement horizontale durant cette phase de déplacement.

La figure 18 illustre un exemple de réalisation d'un bras latéral 15 télescopique articulé sur le chariot 16. Le pivotement autour d'une articulation 16a est assuré par exemple par un premier vérin de commande 24. Le pivotement du préhenseur 17 par rapport au bras latéral 15 est assuré grâce à un second vérin de commande 25. Un vérin de télescope 26 est par exemple associé à chaque bras latéral 15 télescopique.

La figure 19 illustre le manipulateur motorisé 6, lorsque ce dernier a disposé la palette 14 chargée, dans une position de verrouillage sur la structure du véhicule. La structure ou les parois latérales du véhicule comportent avantageusement des zones de verrouillage 22 ou 23 lesquelles sont pourvues de logements ou de plots escamotables permettant de verrouiller ladite palette 14. D'autres moyens de verrouillage connus peuvent également être envisagés dans le cadre de la présente invention.

Les bras latéraux 15 sont avantageusement télescopiques et ils sont articulés sur leur chariot 16. Les préhenseurs 17 sont eux articulés sur les extrémités inférieures des bras latéraux 15.

La figure 19 montre ainsi un exemple de position dans laquelle la palette 14 est inclinée vers le bas dans une partie haute de l'espace de chargement.

La figure 19 illustre également une remorque 10 sur laquelle les éléments de structure 11 sont réalisés avec des montants reliant les rails 12 et permettant de supporter des parois par exemple sous forme d'éléments de couverture rigides ou souples.

Les zones de verrouillage 22 ou 23 présentent avantageusement des logements pour recevoir des plots de verrouillage escamotables coopérant avec les palettes 14. A titre d'exemple, lorsqu'une palette 14 est arrivée dans sa position de chargement, les plots de verrouillage s'engagent dans les logements correspondants des parois ou treillis pour verrouiller ladite palette 14 sur la structure 11. Une fois la palette 14 verrouillée, les préhenseurs 17 se déconnectent de ladite palette 14. Les logements bloquent ainsi la palette 14 en empêchant tout mouvement de celle-ci, notamment tout mouvement horizontal et vertical.

Alternativement, les logements peuvent être répartis sur la palette 14 et les plots de verrouillage sont montés sur le châssis.

La figure 19 illustre le dispositif de chargement/déchargement dans une position de chargement extrême supérieure. Pour que la palette 14 atteigne une telle position, il convient de commander une contraction maximale ou presque du premier vérin de commande 24 et une extension maximale ou presque du second vérin de commande 25. On obtient ainsi l'inclinaison vers le bas et vers l'avant de la palette 14.

Lors d'un exemple de mise en oeuvre préférentiel du procédé de chargement/déchargement conforme à l'invention, on exécute successivement les étapes suivantes.

Lors d'une première étape a), on saisit ou on importe des données primaires relatives aux charges dans l'automate 5. Ces données primaires sont relatives par exemple aux dimensions, au poids et/ou à une orientation préférentielle de chaque charge.

Lors d'une étape b), on détermine grâce à l'automate 5, la position optimale de chargement pour chaque charge en fonction des données primaires et de données complémentaires relatives à des contraintes de chargement/déchargement, de transport et/ou de distribution des charges. Ces données complémentaires sont par exemple saisies par l'opérateur

Lors d'une étape c), on détermine les déplacements automatisés du manipulateur 6 motorisé par l'intermédiaire de l'automate 5.

Lors d'une étape d), on saisit automatiquement à l'aide du manipulateur 6 motorisé une palette 14 dans une position de stockage dans l'espace de chargement et on positionne ladite palette 14 dans une position de chargement située à l'arrière du véhicule. La palette 14 est par exemple posée à plat sur le sol.

On dispose ensuite, lors d'une étape e), une charge sur la palette 14.

Lors d'une étape f), on déplace automatiquement à l'aide du manipulateur 6 motorisé, la palette 14 supportant la charge, dans sa position de chargement optimale et on verrouille automatiquement ladite palette 14 chargée sur les éléments de structure 11 du véhicule.

A des fins de déchargement, on utilise l'ensemble des données relatives au chargement enregistrées, pour déterminer selon une étape g) une séquence de déchargement des palettes chargées 14 disposées dans l'espace de chargement.

Ensuite, on déverrouille automatiquement, selon une étape h), la palette 14 chargée et on déplace cette dernière à l'aide du manipulateur 6 motorisé vers une position de déchargement extérieure à l'arrière du véhicule.

Selon une étape i), on dégage la charge de la palette 14.

Enfin, selon une étape j), on ramène et on dépose automatiquement à l'aide du manipulateur 6 motorisé, la palette 14 vide dans une position de stockage dans l'espace de chargement.

Les positions de chargement et les positions de déchargement sont situées en général soit directement au sol, soit sur un quai.

Selon un exemple de mise en oeuvre conforme à l'invention, le procédé consiste à réitérer les opérations chargement d) à f) et les opérations de déchargement g) à j) de manière à charger, respectivement décharger complètement le véhicule.

Selon un exemple de mise en oeuvre conforme à l'invention, le procédé consiste à déplacer le manipulateur motorisé de manière guidée sur les éléments de structure pour pouvoir atteindre chacune des positions de chargement déterminées.

Selon un exemple de mise en oeuvre conforme à l'invention, le procédé consiste à charger/décharger un train de véhicules, du genre véhicule à moteur et remorque, comprenant un premier véhicule comportant un premier espace de chargement et un second véhicule comportant un second espace de chargement.

Selon un exemple de mise en oeuvre conforme à l'invention, le procédé consiste à l'issue des opérations de chargement/déchargement, à escamoter le manipulateur motorisé 6 dans une position de transport définie sur les éléments de structure.

Avantageusement, le procédé consiste à déplacer lors du chargement certaines palettes 14 d'une zone de stockage vers une autre de manière à mieux répartir les charges sur le véhicule.

Le procédé utilise de préférence un automate embarqué.

Le procédé consiste aussi à échanger des informations entre un opérateur, des bases de stockage de données 1, 2, 3 et l'automate 5 via des liaisons de communication sans fil. L'opérateur possède à cet effet un appareil du genre PC, téléphone mobile ou tablette tactile.

Le procédé conforme à l'invention permet selon un exemple de mise en oeuvre, à transmettre à l'opérateur des instructions de chargement et notamment les sens de roulage sur les palettes lorsque les charges sont des voitures ou sur l'identification de la charge à déposer sur la palette saisie par le manipulateur 6 motorisé.

Les données enregistrées dans des bases de stockage de données 1, 2, 3 alimentant l'automate sont avantageusement actualisées régulièrement. Les bases de stockage de données 1, 2, 3 sont par exemple délocalisées par rapport à l'automate 5.

Selon un exemple de mise en oeuvre conforme à l'invention, le procédé consiste à utiliser un moyen de saisie de données, du genre PC, tablette tactile ou téléphone mobile, permettant à l'opérateur de saisir dans l'automate des informations complémentaires, liées par exemple au chargement, au déchargement ou à des contraintes inattendues, lesquelles doivent être prises en compte pour effectuer les opérations de chargement d) à f) ou de déchargement g) à j).

Selon un exemple de mise en oeuvre conforme à l'invention, le procédé consiste à fournir à l'automate une instruction de poursuite de l'opération de chargement ou de déchargement, dès que les opérations respectives pour sangler ou désangler la charge sont terminées.

Le procédé consiste avantageusement à transmettre à l'opérateur des instructions pour sangler les charges entre les étapes e) et f) ou pour désangler les charges lors du déchargement. Ces opérations sont effectuées lorsque la palette 14 supportant une charge est disposée dans une position arrière, stabilisée et surélevée par rapport au sol, comme le montre par exemple la figure 15.

Il est évident que la présente description ne se limite pas aux exemples explicitement décrits, mais comprend également d'autres modes de réalisation et/ou de mise en oeuvre.

## Revendications

1. Procédé de chargement d'un espace de chargement délimité par des éléments de structure (11) d'au moins un véhicule routier (10) ou ferroviaire ou un conteneur, avec des charges comprenant notamment des voitures (20) et/ou du fret, consistant à utiliser un manipulateur motorisé (6) comportant deux bras articulés (15), notamment dans leur partie supérieure, pour déplacer les charges de l'extérieur de l'espace de chargement vers une position de chargement sur les éléments de structure dans l'espace de chargement et inversement, **caractérisé en ce qu'**il consiste à :
a - saisir ou importer des données primaires relatives aux charges dans un automate (5),
b - calculer automatiquement grâce à une intelligence embarquée ou à distance, la position optimale de chargement pour chaque charge en fonction des données primaires et de données complémentaires relatives à des contraintes de chargement et/ou de déchargement, de transport et/ou de distribution des charges,
c - déterminer automatiquement grâce à une intelligence embarquée ou à distance les déplacements automatisés du manipulateur motorisé par l'intermédiaire de l'automate en fonction des calculs effectués lors de l'étape b),
d - saisir automatiquement à l'aide du manipulateur motorisé une palette (14) dans une position de stockage dans l'espace de chargement et positionner ladite palette dans une position de chargement située à l'arrière du véhicule,
e - disposer une charge sur la palette, et
f - déplacer automatiquement à l'aide du manipulateur motorisé, la palette supportant la charge dans sa position de chargement optimale et verrouiller ladite palette chargée sur les éléments de structure du véhicule de manière automatique et pilotée par l'automate.

2. Procédé de déchargement d'un véhicule chargé selon le procédé de chargement conforme à la revendication 1, après une phase de transport des charges, **caractérisé en ce qu'**il consiste à :
g - utiliser l'ensemble des données relatives au chargement enregistrées pour déterminer une séquence de déchargement des palettes chargées disposées dans l'espace de chargement,
h - déverrouiller automatiquement une palette chargée et déplacer ladite palette chargée à l'aide du manipulateur motorisé vers une position de déchargement extérieure à l'arrière du véhicule,
i - dégager la charge de la palette, et
j - ramener et déposer automatiquement à l'aide du manipulateur motorisé, la palette vide dans une position de stockage dans l'espace de chargement.

3. Procédé selon la revendication 1 ou 2, **caractérisé en ce qu'**il consiste à déplacer le manipulateur motorisé de manière guidée sur les éléments de structure pour pouvoir atteindre chacune des positions de chargement déterminées.

4. Procédé selon l'une quelconque des revendications 1 à 3, **caractérisé en ce qu'**il consiste à charger/décharger un train de véhicules, du genre véhicule à moteur et remorque, comprenant un premier véhicule comportant un premier espace de chargement et un second véhicule comportant un second espace de chargement.

5. Procédé selon l'une quelconque des revendications 1 à 4, **caractérisé en ce qu'**il consiste à l'issue des opérations de chargement/déchargement, à escamoter le manipulateur motorisé dans une position de transport définie sur les éléments de structure.

6. Procédé selon l'une quelconque des revendications 1 à 5, **caractérisé en ce qu'**il consiste à déplacer lors du chargement certaines palettes d'une zone de stockage vers une autre de manière à mieux répartir les charges sur le véhicule.

7. Procédé selon l'une quelconque des revendications 1 à 6, **caractérisé en ce qu'**il consiste à utiliser un automate embarqué lequel échange des informations avec un opérateur et/ou avec des bases de stockage de données via une liaison de communication sans fil reliant l'automate à un appareil du genre PC, téléphone mobile ou tablette tactile de l'opérateur.

8. Procédé selon la revendication 7, **caractérisé en ce qu'**il consiste à transmettre à l'opérateur des instructions de chargement et notamment les sens de roulage sur les palettes lorsque les charges sont des voitures ou sur l'identification de la charge à déposer sur la palette saisie par le manipulateur motorisé.

9. Procédé selon l'une quelconque des revendications 1 à 8, **caractérisé en ce qu'**il consiste à actualiser régulièrement les données enregistrées dans des bases de stockage de données alimentant l'automate, en utilisant des bases de stockage de données délocalisées par rapport à l'automate.

10. Procédé selon l'une quelconque des revendications 7 à 9, **caractérisé en ce qu'**il consiste à utiliser un moyen de saisie de données, permettant à l'opérateur de saisir dans l'automate des informations complémentaires, liées par exemple au chargement, au déchargement ou à des contraintes inattendues, lesquelles doivent être prises en compte pour effectuer les opérations de chargement d) à f) ou de déchargement g) à i).

11. Procédé selon l'une quelconque des revendications 1 à 10, **caractérisé en ce qu'**il consiste à immobiliser la palette supportant la charge à l'extérieure du véhicule et ce à une hauteur donnée pour sangler et/ou désangler la charge sur la palette.

12. Procédé selon la revendication 11, **caractérisé en ce qu'**il consiste à transmettre des instructions pour sangler ou désangler les charges à un opérateur et à fournir à l'automate une instruction de poursuite de l'opération de chargement ou de déchargement, dès que les opérations respectives pour sangler ou désangler la charge sont terminées.

13. Dispositif de chargement/déchargement pour mettre en oeuvre le procédé de chargement/déchargement selon l'une quelconque des revendications 1 à 12, comprenant un manipulateur motorisé comportant deux bras articulés, notamment dans leur partie supérieure destiné à coopérer avec un véhicule pour déplacer les charges de l'extérieur d'un espace de chargement du véhicule vers une position de chargement sur les éléments de structure dans l'espace de chargement et inversement, **caractérisé en ce qu'**il comprend :
- une intelligence embarquée ou à distance ;
- un automate pour commander les déplacements automatiques du manipulateur motorisé en fonction des calculs effectués par l'intelligence embarquée ou à distance à partir des données primaires et/ou complémentaires,
- des organes de préhension et d'orientation permettant au manipulateur motorisé de saisir et d'orienter les palettes chargées ou non,
- des moyens de guidage et d'orientation pour déplacer et orienter le manipulateur motorisé le long des éléments de structure du véhicule,
- des moyens de verrouillage/déverrouillage des palettes dans leur position de chargement sur les éléments de structure par des moyens comportant des organes d'actionnement automatisés et pilotés par l'automate, et
- des moyens de communication entre l'automate et l'opérateur supervisant les opérations automatisées de chargement et de déchargement.

14. Dispositif de chargement/déchargement selon la revendication 13, **caractérisé en ce que** le manipulateur motorisé comporte deux bras latéraux articulés et destinés à saisir une palette, chaque bras latéral étant d'une part monté pivotant avec sa partie supérieure sur un chariot se déplaçant sur un rail de guidage disposé en partie supérieure des éléments de structure et d'autre part assurant avec sa partie d'extrémité de préhension, un montage pivotant sur un côté de la palette saisie.

15. Dispositif de chargement/déchargement selon la revendication 14, permettant de charger/décharger un train de véhicules, du genre véhicule à moteur et remorque, comprenant un premier véhicule comportant un premier espace de chargement et un second véhicule comportant un second espace de chargement, **caractérisé en ce que** chaque rail de guidage comprend une partie mobile ou télescopique permettant au dit rail de guidage de s'allonger pour s'étendre au moins en partie au-dessus du second espace de chargement du second véhicule articulé au premier véhicule, ou pour faire la jonction avec des rails existant au niveau du second espace de chargement, les chariots pouvant alors se déplacer d'un espace de chargement à l'autre.

16. Dispositif de chargement/déchargement selon la revendication 14, **caractérisé en ce que** les rails de guidage sont conducteurs électriques, connectés à une source d'énergie électrique et alimentent en énergie électrique les chariots par l'intermédiaire de patins.

17. Dispositif selon l'une quelconque des revendications 13 à 16, **caractérisé en ce que** le manipulateur est associé au véhicule et embarqué sur ledit véhicule, ou associé à une base de chargement/déchargement et demeure sur ladite base entre deux opérations de chargement/déchargement successives.

## Patentansprüche

1. Verfahren zum Be- und Entladen eines durch Konstruktionselemente (11) begrenzten Laderaums, mindestens eines Straßen-(10) oder Schienenfahrzeugs oder eines Containers für Ladungen, die insbesondere Wagen (20) und/oder Fracht umfassen und das darin besteht, einen motorgetriebenen Manipulator (6), mit zwei Gelenkarmen (15) einzusetzen, abgewinkelt insbesondere im oberen Bereich, um die Lasten von außerhalb des Laderaums in eine Ladeposition auf den Konstruktionselementen innerhalb des Laderaums zu befördern und umgekehrt, **dadurch gekennzeichnet, dass** es aus dem Folgenden besteht:
a) Eingabe oder Import von Primärdaten in Bezug auf die Lasten in eine Logiksteuerung (5).
b) automatische Berechnung der optimalen Ladeposition für jede Ladung, dank einer eingebauten oder fernkonfigurierten Intelligenz entsprechend den Primärdaten und zusätzlicher Daten zu den Lade- und/oder Entlade-, Transport- und/oder Lastverteilungsbedingungen;
c) dank einer eingebauten oder fernkonfigurierten Intelligenz Bestimmung der automatisierten Bewegungen des motorgetriebenen Manipulators entsprechend den in Schritt b) durchgeführten Berechnungen,
d) mittels des motorgetriebenen Manipulators automatisches Ergreifen einer Palette (14) in einer Ladeposition im Laderaum und Ausrichten dieser Palette in einer Ladeposition hinter dem Fahrzeugs,
e) Auflegen einer Last auf die Palette und
f) automatische Beförderung der mit der Last beladenen Palette mittels des motorgetriebenen Manipulators in ihre optimale Ladeposition und Verriegeln dieser beladenen Palette mit den Konstruktionselementen des Fahrzeugs und zwar automatisch durch die Logiksteuerung gesteuert.

2. Entladeverfahren eines Fahrzeugs, das entsprechend dem Ladeverfahren nach Anspruch 1 beladen wurde, nach einer Lasttransportphase, **dadurch gekennzeichnet, dass** es darin besteht:
g) alle gespeicherten Daten über die Lieferung zu nutzen, um eine Entladesequenz für die im Laderaum angeordneten Paletten zu bestimmen,
h) eine beladene Palette automatisch zu entriegeln und dieser Palette mittels des motorgetriebenen Manipulators in eine Ladeposition außerhalb und hinter dem Fahrzeug zu befördern
i) die Last von der Palette abzunehmen und
j) mittels des motorgetriebenen Manipulators die leere Palette wiederaufzunehmen und in einer Ladeposition innerhalb des Frachtraums abzusetzen.

3. Verfahren gemäß Anspruch 1 oder 2, **dadurch gekennzeichnet, dass** es darin besteht, den motorgetriebenen Manipulator geführt über die Strukturelemente zu verschieben, um jede der bestimmten Ladepositionen erreichen zu können.

4. Verfahren nach einem der vorstehenden Ansprüche 1 bis 3, **dadurch gekennzeichnet, dass** es darin besteht, einen Lastzug, vom Typ Motorfahrzeug und Anhänger zu be-/ entladen, der ein erstes Fahrzeug, mit einem ersten Laderaum und ein zweites Fahrzeug mit einem zweiten Laderaum enthält.

5. Verfahren nach einem der vorstehenden Ansprüche 1 bis 4, **dadurch gekennzeichnet, dass** es darin besteht, nach Beendigung des Be-/ Entladevorgangs den motorgetriebenen Manipulator in eine an den Konstruktionselementen definierte Transportposition einzuziehen.

6. Verfahren nach einem der vorstehenden Ansprüche 1 bis 5, **dadurch gekennzeichnet, dass** es darin besteht, beim Laden bestimmte Paletten aus einer Lagerzone in eine andere zu verlagern, um die Lasten besser im Fahrzeug zu verteilen.

7. Verfahren nach einem der vorstehenden Ansprüche 1 bis 6, **dadurch gekennzeichnet, dass** es darin besteht, eine eingebaute Logiksteuerung zu verwenden, der Informationen mit einer Bedienperson austauscht und/ oder mit Speicherdatenbanken , über eine drahtlose Kommunikationsverbindung, die die Logiksteuerung mit einem Gerät vom Typ PC, Mobiltelefon oder Tablet- PC der Bedienperson verbindet.

8. Verfahren nach dem Anspruch 7, **dadurch gekennzeichnet, dass** es darin besteht, an die Bedienperson Ladeanweisungen zu übermitteln und insbesondere die Rollrichtung auf den Paletten, wenn es sich bei den Lasten um Wagen handelt oder zur Identifizierung der vom motorgetriebenen Manipulator ergriffenen Last, die auf der Palette abgestellt werden soll.

9. Verfahren nach einem der vorstehenden Ansprüche 1 bis 8, **dadurch gekennzeichnet, dass** es darin besteht, die in den Speicherdatenbanken aufgezeichneten Daten, die die Logiksteuerung versorgen, regelmäßig zu aktualisieren, unter Verwendung von Speicherdatenbanken, die sich von der Logiksteuerung entfernt befinden.

10. Verfahren nach einem der vorstehenden Ansprüche 7 bis 9, **dadurch gekennzeichnet, dass** es darin besteht ein Mittel zur Datenerfassung einzusetzen, welches es der Bedienperson ermöglicht, in der Logiksteuerung zusätzliche Informationen zu erfassen, die zum Beispiel mit dem Be- oder Entladen oder unerwarteten Erfordernissen zusammenhängen, die berücksichtigt werden müssen, um die Ladevorgänge d) bis f) oder die Entladevorgänge g) bis i) durchzuführen.

11. Verfahren nach einem der vorstehenden Ansprüche 1 bis 10, **dadurch gekennzeichnet, dass** es darin besteht, die die Last tragende Palette außerhalb des Fahrzeugs unbeweglich zu halten und zwar in einer bestimmten Höhe, um die Last auf der Palette zu verzurren oder zu lösen.

12. Verfahren gemäß Anspruch 11, **dadurch gekennzeichnet, dass** es darin besteht, einer Bedienperson Anweisungen zu übermitteln, um die Lasten zu verzurren oder zu lösen und der Logiksteuerung eine Anweisung zum Fortsetzen des Be- oder Entladevorgangs zu liefern, sobald die jeweiligen Verzurr- oder Lösevorgänge der Last beendet wurden.

13. Be-/ Entlade- Vorrichtung zur Umsetzung des Be-/ Entladevorgangs nach einem der vorstehenden Ansprüche 1 bis 12, mit einem motorgetriebenen Manipulator, mit zwei Gelenkarmen, abgewinkelt insbesondere im oberen Bereich, um im Zusammenspiel mit einem Fahrzeug die Lasten von außerhalb des Laderaums in eine Ladeposition auf den Konstruktionselementen innerhalb des Laderaums zu befördern und umgekehrt, **dadurch gekennzeichnet, dass** es umfasst:
- eine eingebaute oder fernkonfigurierte Intelligenz;
- eine Logiksteuerung zur Steuerung der automatischen Verschiebungen des motorgetriebenen Manipulators, entsprechend den Berechnungen der eingebauten Intelligenz ausgehend von den Primärdaten und zusätzlichen Daten;
- Greif- und Ausrichtungsteile, mit denen der motorgetriebene Manipulator die beladenen oder leeren Paletten ergreifen und ausrichten kann,
- Führungs- und Ausrichtungsvorrichtungen zur Verschiebung und Ausrichtung des motorgetriebenen Manipulators entlang der Konstruktionselemente des Fahrzeugs,
- Vorrichtungen zum Verriegeln der Paletten in ihrer Ladeposition an den Konstruktionselementen durch Vorrichtungen, die automatische, von der Logiksteuerung gesteuerten Betätigungsteile enthalten, und
- Mittel zur Kommunikation zwischen der Logiksteuerung und der Bedienperson, die die automatisierten Be- und Entladevorgänge überwacht.

14. Be-/ Entlade- Vorrichtung gemäß Anspruch 13, **dadurch gekennzeichnet, dass** der motorgetriebene Manipulator zwei über Gelenk verbundene Seitenarme zum Ergreifen einer Palette umfasst, jeder Seitenarm ist erstens mit seinem oberen Teil schwenkbar auf einem Schlitten montiert, der an einer Führungsschiene hin- und herfährt, die am oberen Teil der Konstruktionselemente angeordnet ist und gewährleistet zweitens mit seinem zum Greifen bestimmten Endstück eine schwenkbare Montage, auf einer Seite der ergriffenen Palette.

15. Be-/ Entlade- Vorrichtung gemäß Anspruch 14, **dadurch gekennzeichnet, dass** es darin besteht, einen Lastzug, vom Typ Motorfahrzeug und Anhänger zu be-/ entladen, der ein erstes Fahrzeug, mit einem ersten Laderaum und ein zweites Fahrzeug mit einem zweiten Laderaum enthält, **dadurch gekennzeichnet, dass** jede Führungsschiene einen beweglichen oder teleskopischen Teil umfasst, durch den diese Führungsschiene zumindest teilweise über den zweiten Laderaum des zweiten Fahrzeugs verlängert werden kann, das an das erste Fahrzeug angehängt ist oder um eine Verbindung zwischen den im zweiten Laderaum vorhandenen Schienen herzustellen, so dass die Schlitten sich dann von einem Laderaum in den anderen bewegen können.

16. Be-/ Entlade- Vorrichtung gemäß Anspruch 14, **dadurch gekennzeichnet, dass** die Führungsschienen elektrische Leiter sind, die mit einer Stromquelle verbunden sind und die Schlitten über Schuhe mit Strom versorgen.

17. Be-/ Entlade- Vorrichtung gemäß einem der Ansprüche 13 bis 16, **dadurch gekennzeichnet, dass** der Manipulator mit dem Fahrzeug verbunden und in ihm eingebaut ist oder mit einer Be-/ Entlade- Basis verbunden ist und in dieser Basis zwischen zwei aufeinanderfolgenden Be-/ Entlade- Vorgängen verbleibt.

## Claims

1. Method for loading a loading space delimited by structural elements (11) of at least one road or rail vehicle (10), or a container, with loads comprising in particular cars (20) and/or freight, consisting in using a motorized manipulator (6) comprising two articulated arms (15), in particular in their upper portion, to move the loads from the outside of the loading space toward a loading position on the structural elements in the loading space and vice versa, **characterized in that** it consists in:
a - inputting or importing of primary data relative to the loads into a logic controller (5),
b - automatically calculating, by means of onboard or remote intelligence, the optimal loading position for each load according to the primary data and complementary data relative to requirements of loading and/or unloading, transport and/or distribution of the loads,
c - automatically determining, by means of onboard or remote intelligence, the automated movements of the motorized manipulator by virtue of the logic controller, as a function of calculations made during step b),
d - automatically picking-up, by means of the motorized manipulator, a pallet (14) in a storage position in the loading space and positioning said pallet in a loading position located at the rear of the vehicle,
e - placing a load on the pallet and
f - automatically moving, by means of the motorized manipulator, the pallet carrying the load to the optimal loading position and locking said loaded pallet on the structural elements of the vehicle automatically and under the control of the logic controller.

2. Method for unloading a vehicle loaded using the loading method according to claim 1, following a load transport phase, **characterized in that** it consists in:
g - using all the recorded data relative to loading, to determine an unloading sequence for the loaded pallets placed in the loading space,
h - automatically unlocking a loaded pallet and moving said loaded pallet using the motorized manipulator to an outside unloading position at the rear of the vehicle,
i - removing the load from the pallet, and
j - bringing back and depositing automatically using the motorized manipulator the empty pallet in a storage position in the loading space.

3. Method according to claim 1 or 2, **characterized in that** it consists in moving the motorized manipulator, in a guided way, over the structural elements in order to reach each of the determined loading positions.

4. Method according to any one of claims 1 to 3, **characterized in that** it consists in loading/unloading a train of vehicles, such as a tractor vehicle and a trailer, comprising a first vehicle comprising a first loading space and a second vehicle comprising a second loading space.

5. Method according to any one of claims 1 to 4, **characterized in that** it consists, on completion of the loading/unloading operations, in retracting the motorized manipulator to a defined transport position on the structural elements.

6. Method according to any one of claims 1 to 5, **characterized in that** it consists in moving during the loading some of the pallets from one storage area to another, in order to better distribute the loads on the vehicle.

7. Method according to any one of claims 1 to 6, **characterized in that** it consists in using an onboard logic controller that exchanges information with an operator and/or with data storage databases, via a wireless communication link connecting the logic controller to operator equipment such as a PC computer, touch tablet or mobile phone.

8. Method according to claim 7, **characterized in that** it consists in transmitting to the operator loading instructions and in particular the driving direction on the pallets when the loads are cars or an identification of the loads to be placed on the pallet picked up by the motorized manipulator.

9. Method according to any one of claims 1 to 8, **characterized in that** it consists in regularly updating data recorded in storage databases supplying the logic controller, using storage databases that are delocalized with respect to the logic controller.

10. Method according to any one of claims 7 to 9, **characterized in that** it consists in using a means of data input so that the operator can input into the logic controller additional information, linked for instance to loading, to unloading, or to unexpected requirements that must be taken into consideration for performing loading d) to f) or unloading g) to i) operations.

11. Method according to any one of claims 1 to 10, **characterized in that** it consists in immobilizing the pallet carrying the load outside the vehicle at a given height, to strap and/or unstrap the load on the pallet.

12. Method according to claim 11, **characterized in that** it consists in transmitting instructions to an operator for strapping or unstrapping the loads and in supplying the logic controller with an instruction to continue the loading or unloading operation as soon as the respective operations for strapping or unstrapping the load are complete.

13. Loading/unloading device for implementing the loading/unloading method according to any one of claims 1 to 12, comprising a motorized manipulator with two articulated arms, in particular in their upper section, designed to work together with a vehicle to move the loads from outside a vehicle loading space to a loading position on the structural elements in the loading space and, inversely, **characterized in that** it includes:
- on-board or remote intelligence means;
- a logic controller controlling the automatic movements of the motorized manipulator according to the calculations of the on-board or remote intelligence means, using primary and/or complementary data,
- picking up and orientation devices enabling the motorized manipulator to pick up and orient the loaded or unloaded pallets,
- guidance and orientation means for moving and orienting the motorized manipulator along the structural elements of the vehicle,
- means of locking/unlocking the pallets in their loading position on the structural elements by means comprising automated actuating devices controlled by the logic controller, and
- means of communication between the logic controller and the operator supervising the automated loading and unloading operations.

14. Loading/unloading device according to claim 13, **characterized in that** the motorized manipulator has two lateral articulated arms designed to pick up a pallet, each lateral arm being mounted to swivel in its upper section on a carriage moving along a guide rail arranged in the upper part of the structural elements and on the other, ensuring with its gripping end part, a swiveling mounting on a side of the picked up pallet.

15. Loading/unloading device according to claim 14, for loading/unloading a train of vehicles, such as a tractor vehicle and a trailer, comprising a first vehicle comprising a first loading space and a second vehicle comprising a second loading space **characterized in that** each guide rail has a mobile or telescopic section enabling said guide rail to lengthen in order to extend at least partly above the second loading space of the second vehicle articulated on the first vehicle, or to form a junction with rails present in the second loading spaces so that the carriages can then move from one loading space to another.

16. Loading/unloading device according to claim 14, **characterized in that** the guide rails are electrically conducting, connected to a source of electric energy and feed electric energy to the carriages by means of shoes.

17. Device according to any one of claims 13 to 16, **characterized in that** the manipulator is associated with the vehicle and carried on said vehicle, or associated with a loading/unloading base and remains on said base between two successive loading/unloading operations.
